# EUROPÄISCHE PATENTSCHRIFT

(11) **EP 4 342 687 B1**
(45) Veröffentlichungstag und Bekanntmachung des Hinweises auf die Patenterteilung: **25.02.2026**
(21) Anmeldenummer: 23196146.7
(22) Anmeldetag: 08.09.2023
(51) Int. Cl.: B60C 11/03

(54) **FAHRZEUGREIFEN**
VEHICLE TYRE
PNEUMATIQUE POUR VÉHICULES

(30) Priorität: 26.09.2022 DE 102022210142
(43) Veröffentlichungstag der Anmeldung: 27.03.2024
(73) Patentinhaber: Continental Reifen Deutschland GmbH, 30175 Hannover (DE)
(72) Erfinder: Behr, Ulrich, 30165 Hannover (DE); Milchers, Wolfgang, 30165 Hannover (DE); Bauer, Claudia, 30165 Hannover (DE)
(74) Vertreter: Continental Corporation

(56) Entgegenhaltungen:
- EP-A1- 2 537 687
- EP-A1- 3 040 216
- EP-A1- 3 169 536
- JP-A- 2017 170 938
- JP-A- H04 224 403
- US-A- 5 154 783

## Beschreibung

Die Erfindung betrifft einen Fahrzeugreifen mit wenigstens einer ersten und einer zweiten Rille, wobei die erste und die zweite Rille in einem Schulterbereich des Fahrzeugreifens ausgebildet sind und vornehmlich in Querrichtung verlaufen, wobei wenigstens eine vornehmlich in Umfangsrichtung verlaufende Entwässerungsnut so angeordnet ist, dass die Entwässerungsnut in ein axial inneres Ende der erste Rille mündet.

Reifenprofile unterscheiden sich unter anderem durch die Größe eines Negativvolumens, oft auch als Void bezeichnet, voneinander. Ein hohes Negativvolumen ist generell vorteilhaft für das Verhalten des Fahrzeugreifens bei Nässe, beispielsweise, um Aquaplaning zu verhindern. Andererseits ist ein geringes Negativvolumen besser geeignet, um eine Geräuschentwicklung am Fahrzeugreifen gering zu halten und somit beispielsweise etwaige gesetzliche Geräuschlimits einzuhalten. Ein weiterer potenzieller Nachteil eines hohen Negativvolumens kann, je nach Anordnung von Rillen und Einschnitten in einem Reifen, auch eine verringerte Fahrstabilität und generell eine Verschlechterung der strukturellen Integrität des Fahrzeugreifens sein. Trotz vielfältiger Bemühungen in der Vergangenheit bleibt es eine Herausforderung, Reifenprofile zu schaffen, die sowohl möglichst stabil und leise als auch möglichst gut geeignet für nasse Fahrbahnen sind.

DE 10 2014 225 621 A1 beschreibt einen Fahrzeugluftreifen, wobei in einem schulterseitigen Profilband eine Vielzahl von in Umfangsrichtung beabstandeten Querrillen verläuft, wobei an einem laufstreifeninnenseitigen Ende der Querrillen in Umfangsrichtung verlaufende Entwässerungsnuten einmünden. Hierdurch soll sowohl ein Abtransport von Wasser unterstützt als auch eine ausreichende Stabilität gewährleistet werden.

EP 3 169 536 A1 beschreibt einen Laufstreifen, welcher ein bei einer Außenschulter angeordnetes Profilband aufweist, das durch eine Umfangsrille von weiteren Profilpositiven getrennt ist, wobei im Profilband in Umfangsrichtung verlaufende, miteinander im Wesentlichen fluchtende und voneinander beabstandete Kurzrillen verlaufen, an deren einen Enden jeweils eine in Richtung Laufstreifenrand und über diesen hinaus verlaufende Querrille und an deren anderen Enden jeweils eine in Richtung Umfangsrille verlaufende Querrille anschließt. EP 3 040 216 A1 beschreibt einen Reifen mit einer Schulterrippe, in der Querrillen ausgebildet sind, die sich von einem Laufstreifenrand einwärts erstrecken, ohne eine Schulterumfangsrille zu erreichen, wobei erste Einschnitte die Querrillen mit der Umfangsrille verbinden und in Umfangsrichtung verlaufende Einschnitte die ersten Einschnitte kreuzen. EP 2 537 687 A1 beschreibt einen Reifen, der unter anderem auch Hilfsrillen umfasst, wobei die Hilfsrillen Umfangsabschnitte und Breitenabschnitte umfassen. JP 2017 170938 A beschreibt einen Reifen, der unter anderem auch in einer Außenschulter angeordnete Querrillen, Umfangsrillen und Einschnitte umfasst. US 5 154 783 A beschreibt einen Fahrzeugreifen mit einem Profil umfassend mittige Profilblockabschnitte, die sich unter einem Winkel von 5° bis 30° gegenüber einer Äquatorebene erstrecken und gabelförmige Endabschnitte, die sich im Schulterbereich unter einem Winkel von 60° bis 90° erstrecken. JP H04 224403 A beschreibt ein Profil mit schrägen Rillen, Einschnitten, die sich durch die schrägen Rillen erstrecken und Hilfsrillen.

Der Erfindung liegt die Aufgabe zugrunde, das Ausleiten von Wasser gegenüber dem Stand der Technik durch geeignete Strukturen noch weiter zu erleichtern, ohne dabei die Stabilität des Fahrzeugreifens zu beeinträchtigen und/oder die Stabilität zu verbessern, ohne dabei die Nässeeigenschaften des Reifens negativ zu beeinflussen. Insbesondere soll der Zielkonflikt für ein Profil mit insgesamt geringem Negativvolumen auf hohem Niveau gelöst werden, wobei eine möglichst geringe Geräuschentwicklung am Reifen erzielt werden soll.

Die gestellte Aufgabe wird erfindungsgemäß durch die Merkmale des Anspruchs 1 und unter anderem dadurch gelöst, dass sich die Entwässerungsnut von der ersten Rille aus in Umfangsrichtung an einem axial inneren Ende der zweiten Rille vorbei erstreckt, wobei die Entwässerungsnut nicht mit der zweiten Rille verbunden ist.

Der Erfindung gelingt es wider Erwarten, im Vergleich zum Stand der Technik besonders lange, vornehmlich in Umfangsrichtung verlaufende Entwässerungsnuten auf einem Reifenprofil anzuordnen, ohne die Entwässerungsnuten in einer durchgehend umlaufenden Nut anzuordnen und ohne zusätzliche Kreuzungen und/oder Einmündungen bei vornehmlich in Querrichtung verlaufenden Rillen vorzusehen. Es stellt sich heraus, dass die erfindungsgemäße Anordnung zu besonders guten Ergebnissen im Nasshandling bei gleichzeitiger Begrenzung einer Geräuschentwicklung und ohne Abstriche bei der Fahrstabilität beizutragen im Stande ist.

Die Richtungsbezeichnungen axial, in Axialrichtung, radial, in Radialrichtung und in Umfangsrichtung beziehen sich auf den bestimmungsgemäß an einem Fahrzeug angebrachten Fahrzeugreifen und seine daran vollzogene Rollbewegung. Hierbei bezeichnet die Umfangsrichtung die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft. Die Radialrichtung bezieht sich auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere kann eine Querrichtung auf einer Basisfläche des Fahrzeugreifens verlaufen und senkrecht auf der Umfangsrichtung stehen. Die Basisfläche fällt zusammen mit jener glatten Oberfläche, welche der Fahrzeugreifen aufweisen würde, wenn keinerlei negative und keinerlei positive Profilelemente, wie etwa Rillen oder Vorsprünge vorgesehen wären. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein. Dort, wo beispielweise eine Rille durch einen Laufstreifen des Fahrzeugreifens verläuft, verläuft die Basisfläche als imaginäre Fläche oberhalb der Rille weiter; dort wo beispielsweise ein Vorsprung auf dem Laufstreifen angeordnet ist, verläuft die Basisfläche als imaginäre Fläche unter dem Vorsprung weiter.

Eine Gerade verläuft vornehmlich in einer ersten Richtung, wenn eine dominante Richtungskomponente der Geraden in die erste Richtung zeigt. Dies gilt bei einem Winkel zwischen der Geraden und der ersten Richtung von weniger als 40°, vorzugsweise von weniger als 30°. Ein vornehmlich in einer ersten Richtung verlaufendes Profilelement, wie beispielsweise eine Rille oder eine Entwässerungsnut, kann durch eine vornehmlich in der ersten Richtung verlaufende Gerade beschrieben sein, wobei die Gerade eine Regressionsgerade durch eine Punktwolke aus allen zu dem Profilelement gehörenden Punkten sein kann. Die zu einem Profilelement gehörenden Punkte füllen ein Volumen zwischen der Basisfläche und der physischen Oberfläche des Fahrzeugreifens, wobei jeder Punkt einen verschwindenden Abstand zu wenigstens einem weiteren Punkt aus der Punktwolke des Profilelements hat. Bei einem negativen Profilelement wie einer Rille oder einer Nut können die zu dem Profilelement gehörenden Punkte unterhalb der Basisfläche und oberhalb der physischen Oberfläche des Fahrzeugreifens liegen. Die Konturen des Profilelements an der Basisfläche können in einem konstanten Abstand von der Geraden verlaufen und/oder sich durch Krümmungen und/oder Knicke von der Geraden entfernen bzw. sich an diese annähern. Der Abstand der Konturen zu der Geraden beträgt vorzugsweise weniger als 50%, weiter vorzugsweise weniger als 10% des größten Abstands zwischen zwei Punkten in dem Profilelement.

Die mit den Merkmalen des Hauptanspruchs erzielten Effekte werden durch bevorzugte Ausführungsformen und Ausgestaltungen der Rillen und der Entwässerungsnut sowie der Einmündung der Entwässerungsnut in die erste Rille weiter verstärkt und ergänzt.

Besonders bevorzugt ist eine Ausführung, gemäß der sich die Entwässerungsnut in einem axialen Abstand von 2 mm bis 8 mm an der zweiten Rille vorbei erstreckt. Der Vorbeierstreckungsabstand wird hierbei gemessen als kürzester axialer Abstand zwischen den radial äußeren Rändern der Entwässerungsnut und der zweiten Rille an der Basisfläche des Fahrzeugreifens. Durch den genannten axialen Abstand zwischen Entwässerungsnut und zweiter Rille wird einerseits der Platz auf dem Fahrzeugreifen effizient genutzt und andererseits eine ausreichende Stabilität eines im Bereich des axialen Abstandes verbleibenden Steges zwischen der Entwässerungsnut und der zweiten Rille gewährleistet.

Die erste Rille, die zweite Rille und die Entwässerungsnut sind in einem schulterseitigen Profilband ausgebildet, wobei das schulterseitige Profilband durch eine Umfangsrille von einem mittleren Profilband getrennt ist. Zwischen der zweiten Rille und der Umfangsrille kann ein axialer Zwischenraum vorgesehen sein, wobei sich die Entwässerungsnut in einem axial um die Mitte des axialen Zwischenraums zentrierten Bereich von weniger als 25% des axialen Zwischenraums an der zweiten Rille vorbei erstrecken kann. Mit anderen Worten kann die Entwässerungsnut gemessen an der Axialrichtung ungefähr in der Mitte, vorzugsweise exakt in der Mitte zwischen der Umfangsrille und dem axial inneren Ende der zweiten Rille verlaufen. Durch diese Symmetrie wird zu beiden Seiten der Entwässerungsnut ausreichend Stegbreite zu den benachbarten Rillen gelassen, um die strukturelle Integrität des Fahrzeugreifens auf einem hohen Niveau zu halten.

Die erste und die zweite Rille können in Umfangsrichtung zwischen 20 mm und 50 mm, vorzugsweise zwischen 25 mm und 40 mm voneinander beabstandet sein. Dieser Umfangsabstand bemisst sich als kürzester Abstand in Umfangsrichtung zwischen den radial äußeren Rändern der Rillen an der Basisfläche des Fahrzeugreifens.

Die Entwässerungsnut kann sich in Umfangsrichtung um eine Vorbeierstreckungslänge zwischen 1% und 99%, vorzugsweise zwischen 5% und 25% des Umfangsabstands zwischen der ersten und der zweiten Rille an der zweiten Rille vorbei erstrecken. Hierbei wir ein guter Kompromiss zwischen einer möglichst langen Entwässerungsnut für bessere Nasseigenschaften und einem möglichst großen zusammenhängenden Profilbereich hinter der zweiten Rille für strukturelle Integrität und vorteilhafte Trockeneigenschaften des Fahrzeugreifens gefunden.

Die Entwässerungsnut kann über einen Großteil ihrer Erstreckung eine Nuttiefe von 1,5 mm bis 3 mm aufweisen. Die Nuttiefe kann als größte Tiefe entlang einer Breitenerstreckung der Entwässerungsnut definiert sein, wobei die Breitenerstreckung entlang einer kürzesten Breite der Entwässerungsnut je Position entlang der Längenerstreckung der Entwässerungsnut verlaufen kann. Die Entwässerungsnut kann dann über einen Großteil ihrer Erstreckung die genannte Tiefe aufweisen, wenn die Nuttiefe über einen Großteil von Positionen entlang der Längenerstreckung der Entwässerungsnut, beispielsweise mehr als 50%, die genannte Tiefe aufweist. Die Entwässerungsnut kann eine Nuttiefe von 5% bis 75%, vorzugsweise 15% bis 30% einer Rillentiefe der ersten Rille aufweisen. Die Rillentiefe kann analog zu der Nuttiefe definiert sein. Die Rillentiefe und/oder die Nuttiefe können entlang ihrer Längenerstreckung veränderlich sein. In diesem Fall können die für den Vergleich herangezogenen Tiefen die durchschnittliche Rillentiefe und die durchschnittliche Nuttiefe entlang der Längenerstreckungen der ersten Rille bzw. der Entwässerungsnut sein. Gemäß einer Ausführungsform der Erfindung weist die Entwässerungsnut eine sich über ihre Erstreckung verringernde Nuttiefe auf, wobei das Gefälle vorzugsweise von einer Spitze der Entwässerungsnut kommend, in Richtung der ersten Rille, von einer kleineren Nuttiefe zu einer größeren Nuttiefe verläuft. Vorzugsweise liegt eine minimale Nuttiefe an der Spitze der Entwässerungsnut und eine maximale Nuttiefe an der Mündung in die erste Rille vor; wenn sich die Mündung über einen Verbindungsabschnitt zwischen der ersten Rille und der Entwässerungsnut vollzieht, kann die maximale Nuttiefe am Übergang in den Verbindungsabschnitt vorliegen. Das Gefälle kann über einem Teil oder einer Gesamtheit der lateralen Erstreckung der Entwässerungsnut anliegen. In einer Ausführungsform liegt das Gefälle zwischen der Spitze der Entwässerungsnut und einer von der Spitze aus um 10% bis 50% der Erstreckungslänge entlang der Entwässerungsnut in Richtung der ersten Rille verschobenen Position an. Das Gefälle kann in seiner Steigung konstant oder veränderlich sein. In einer Ausführungsform nimmt die Nuttiefe von einer minimalen Nuttiefe aus mit einer im Absolutwert maximalen Steigung zu, wobei die Steigung mit wachsender Nuttiefe im Absolutwert kleiner wird und im Bereich einer maximalen Nuttiefe im Wesentlichen flach verlaufen kann. Durch die beschriebene Auswahl der Nuttiefe wird ein guter Kompromiss zwischen einem positiven Effekt auf die Nasseigenschaften durch hohes Negativvolumen auf der einen Seite und einem möglichst geringen negativen Effekt auf die strukturelle Integrität und die Geräuschentwicklung am Fahrzeugreifen auf der anderen Seite gefunden. Weiterhin können mit der Ausgestaltung des Gefälles strömungstechnische Eigenschaften und die Entwässerungsfunktion der Entwässerungsnut optimiert werden.

Die Entwässerungsnut und die erste Rille können über einen lateral, also entlang der Basisfläche, abgerundeten Verbindungsabschnitt miteinander verbunden sein. Insbesondere können die Entwässerungsnut und die erste Rille, bzw. die jeweiligen ihre Erstreckung beschreibenden Geraden, einen Winkel einschließen, wobei der Winkel über einen Kreisabschnitt oder eine Approximation eines Kreisabschnitts überwunden wird. Die erste Rille und/oder die Entwässerungsnut können vorzugsweise in erster Ableitung stetig, also tangential an den Verbindungsabschnitt anschließen. Der abgerundete Verbindungsabschnitt kann durch einen Außenradius zwischen 1 mm und 10 mm beschrieben sein, wobei der Außenradius größer als ein Innenradius ist und gemeinsam mit dem Innenradius die Konturen des abgerundeten Verbindungsabschnitts an der Basisfläche des Fahrzeugreifens beschreibt.

Ein Übergangsbereich in der Tiefe zwischen der Entwässerungsnut und der ersten Rille kann eine laterale Übergangserstreckung von 0,5 mm bis 10 mm, vorzugsweise von 2 mm bis 5 mm aufweisen. Mit anderen Worten kann sich die Tiefe über einen wie beschrieben entlang der Basisfläche wenige Millimeter langen und entsprechend steilen Übergang ändern. Alternativ oder zusätzlich kann die Übergangserstreckung vornehmlich in Querrichtung verlaufen. In diesem Fall kann der Übergangsbereich zwischen den beiden verschiedenen Tiefen, nämlich der Tiefe der Entwässerungsnut und der Tiefe der ersten Rille, direkt an den abgerundeten Verbindungsabschnitt zwischen Entwässerungsnut und erster Rille anschließend beginnen und sich in die erste Rille hinein erstrecken.

Durch die beschriebenen lateralen und die Tiefe betreffenden Ausgestaltungen der Verbindungsstelle bzw. des Übergangsbereichs zwischen der Entwässerungsnut und der ersten Rille kann ein guter Kompromiss zwischen einem vorteilhaften Strömungsverhalten, einer guten strukturellen Integrität und einem optisch ansprechenden Erscheinungsbild gefunden werden.

Die Entwässerungsnut kann eine sich über ihre Erstreckung verringernde Breite aufweisen und dabei ihre größte Breite an ihrer Mündung in die erste Rille aufweisen. Wenn sich die Mündung über einen Verbindungsabschnitt zwischen der ersten Rille und der Entwässerungsnut vollzieht, kann die Entwässerungsnut ihre größte Breite am Übergang in den Verbindungsabschnitt aufweisen. Die Breite der Entwässerungsnut wird an der Basisfläche des Fahrzeugreifens und als kürzester Abstand je Position entlang der lateralen Erstreckung der Entwässerungsnut gemessen. Die größte Nutbreite kann zwischen 1 mm und 5 mm, vorzugsweise zwischen 2 mm und 4 mm liegen. Durch die beschriebene Breite und deren Verlauf kann eine besonders wirkungsvolle Entwässerung aus dem Bereich der Entwässerungsnut in die erste Rille erreicht werden.

Die erste Rille und die zweite Rille können entlang eines Großteils ihrer Erstreckung parallel zueinander verlaufen. Die Rillen verlaufen insbesondere dann parallel zueinander, wenn die in Umfangsrichtung zu einer gleichen Orientierung weisenden Konturen der Rillen an der Basisfläche parallel verlaufen, wenn also beispielsweise eine Kontur der ersten Rille an einer in Umfangsrichtung vorderen Seite parallel zu einer Kontur der zweiten Rille an einer in Umfangsrichtung vorderen Seite verläuft. Vorzugsweise können die beiden Rillen entlang wenigstens 50% der lateralen Erstreckung ihrer Konturen an der Basisfläche parallel zueinander verlaufen.

Die erste Rille und/oder die zweite Rille können entlang eines Großteils ihrer Erstreckung in einem Rillenwinkel von 70° bis 90°, vorzugsweise in einem Rillenwinkel von 85° bis 90° zur Umfangsrichtung verlaufen. Eine Rille verläuft entlang eines Großteils ihrer Erstreckung in einem bestimmten Winkel, wenn ein zusammenhängender Anteil der die Rille ausmachenden Punktwolke durch eine in dem bestimmten Winkel verlaufende Regressionsgerade beschrieben werden kann, wobei der zusammenhängende Teil mehr als 50%, vorzugsweise mehr als 67% der Punkte aus der Punktwolke der Rille umfasst. Die erste und/oder die zweite Rille können insbesondere an den axial äußeren Enden in einer von den angegebenen Winkelbereichen abweichenden Richtung auslaufen und insbesondere in Umfangsrichtung abknicken oder abbiegen.

Die Entwässerungsnut kann entlang eines Großteils ihrer Erstreckung in einem Nutwinkel von 0° bis 40°, vorzugsweise in einem Nutwinkel von 5° bis 15° zur Umfangsrichtung verlaufen, wobei der Winkel axial innerhalb an der Umfangsrichtung anliegt. Die Definition einer entlang eines Großteils ihrer Erstreckung in einem bestimmten Winkel verlaufenden Entwässerungsnut kann analog zu der eine Rille betreffenden Definition sein. Der Winkel der Entwässerungsnut öffnet sich von der Umfangsrichtung ausgehend in Axialrichtung nach innen, sodass die Entwässerungsnut von der Mündung in die erste Rille ausgehend entlang ihrer Erstreckung in Umfangsrichtung zu der zweiten Rille und darüber hinaus insbesondere fortschreitend nach axial innen laufen kann. Auf diese Weise kann die Entwässerungsnut bei ihrer Mündung in die erste Rille axial weiter außen angeordnet sein als bei ihrem Vorbeierstrecken an der zweiten Rille. Dies ist insbesondere dann vorteilhaft, wenn, wie gemäß einer bevorzugten Ausführungsform, die erste und die zweite Rille an ihren axial inneren Enden axial auf der gleichen Breite enden. Auf der anderen Seite sollte der Nutwinkel klein genug sein und die Entwässerungsnut somit nahe genug an der Umfangsrichtung verlaufen, dass die mit der Umfangsrichtung verbundenen Vorteile bei der Geräuschentwicklungsbegrenzung ausgenutzt werden können.

Die erste Rille und die Entwässerungsnut können einen Winkel zwischen 90° und 170°, vorzugsweise zwischen 95° und 105° einschließen. Dieser Einschlusswinkel kann sich in Umfangsrichtung und axial nach außen öffnen. Hierdurch wird ein guter Kompromiss zwischen einer effizienten Nutzung der Profilfläche und einer bestmöglichen Funktionalität der Rillen bzw. der Entwässerungsnut gefunden.

Die erste Rille, die zweite Rille und die Entwässerungsnut können eine erste Gruppe von Profilelementen bilden, wobei auf dem Fahrzeugreifen wenigstens eine weitere Gruppe nach dem Muster der ersten Gruppe, also umfassen zwei Rillen und einer Entwässerungsnut in der erfindungsgemäßen Anordnung, ausgebildet ist. Hierbei kann die weitere Gruppe gegenüber der ersten Gruppe in Umfangsrichtung verschoben angeordnet sein. Wenn mehrere Gruppen in dieser Weise hintereinander gereiht werden, kann sich ein AB-Muster ergeben, wobei sich an jeder zweiten Rille axial innen eine Entwässerungsnut vorbei erstreckt, die von einer jeweils in Umfangsrichtung benachbarten Rille ausgeht. Die Rillen der ersten und weiteren Gruppen können in gleichmäßigen Abständen entlang der Umfangsrichtung angeordnet sein oder im Rahmen einer geeigneten Pitchfolge unter variierenden Abständen aufeinanderfolgen.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine perspektivische Ansicht eines Fahrzeugreifens mit Anordnungen aus Rillen und Entwässerungsnuten gemäß einer Ausführungsform der Erfindung,
Figur 2 eine Draufsicht auf eine Gruppe aus Rillen mit einer Entwässerungsnut gemäß einer Ausführungsform der Erfindung,
Figur 3 eine zu einer Längserstreckung durch die erste Rille und die Entwässerungsnut gemäß Figur 2 korrespondierende Schnittansicht.

Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge. Jedoch ist die Erfindung auch an Fahrzeugreifen für Fahrzeuge mit ungerader Reifenzahl, beispielsweise für Motorräder mit Vorteil einsetzbar.

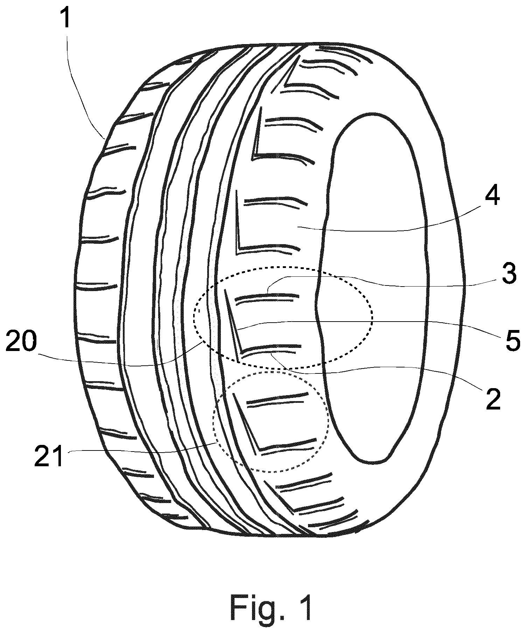

Figur 1 zeigt schematisch eine perspektivische Ansicht eines Fahrzeugreifens 1. Auf einem Schulterbereich 4 sind Querrillen 2, 3 in im Wesentlichen ähnlichen Abständen entlang der Umfangsrichtung angeordnet. An jeder zweiten Rille 3 erstreckt sich an einem axial inneren Ende eine Entwässerungsnut 5 in Umfangsrichtung vorbei, wobei die Entwässerungsnut 5 von einer jeweils in Umfangsrichtung benachbarten ersten Rille 2 ausgeht. Eine erste und zweite Rille 2, 3 können zusammen mit einer Entwässerungsnut 5 als eine erste Gruppe 20 beschrieben werden. Gemäß der gezeigten Ausführungsform ist eine zu der ersten Gruppe im Wesentlichen identische weitere Gruppe 21 in Umfangsrichtung versetzt gegenüber der ersten Gruppe 20 auf dem Schulterbereich 4 des Fahrzeugreifens ausgebildet. Durch eine Aneinanderreihung von mehreren im Wesentlichen identischen Gruppen 20, 21 kann auf der Reifenschulter wie dargestellt ein AB-Profilmuster ausgebildet sein.

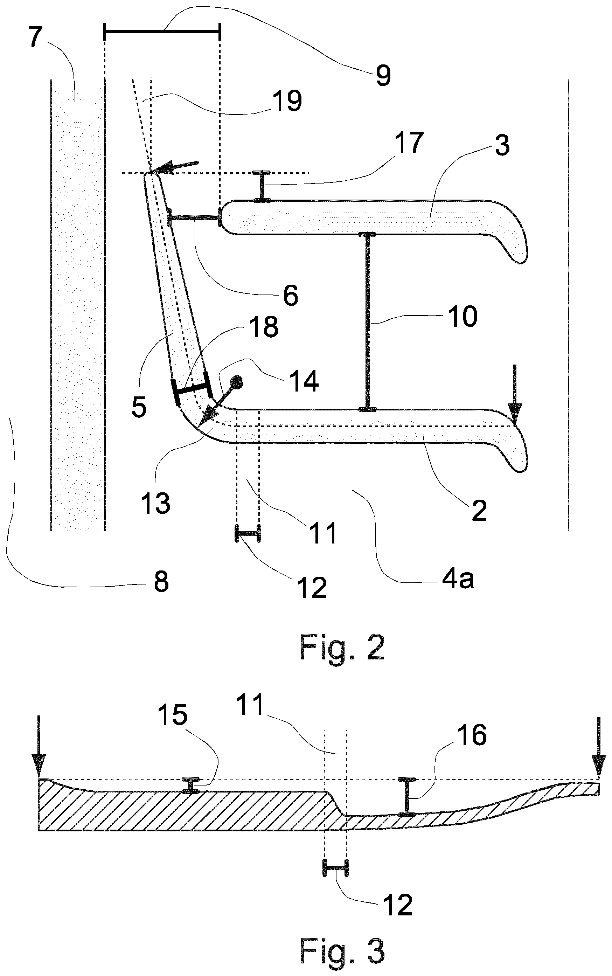

Figur 2 zeigt schematisch eine Draufsicht auf eine der ersten Gruppe 20 aus Figur 1 im Wesentlichen ähnliche Anordnung gemäß einer Ausführungsform der Erfindung. Am rechten Rand der Zeichnung ist ein axial äußerer Rand eines schulterseitigen Profilbands 4a gezeigt. Am linken Rand ist eine Umfangsrille 7 als Abgrenzung gegenüber einem mittleren Profilband 8 angedeutet. Dazwischen erstrecken sich eine erste Rille 2, eine zweite Rille 3 und eine Entwässerungsnut 5.

Die erste und die zweite Rille 2, 3 verlaufen im Wesentlichen in Axialrichtung und sind untereinander über einen Umfangsabstand 10 voneinander beabstandet. Die Entwässerungsnut 5 erstreckt sich in Umfangsrichtung um eine Vorbeierstreckungslänge 17 und in Axialrichtung um einen Vorbeierstreckungsabstand 6 an der zweiten Rille 3 vorbei. Die erste Rille 2 geht in einem Verbindungsabschnitt 13 in die Entwässerungsnut über. Der Verbindungsabschnitt 13 kann durch einen Außenradius 14 beschrieben werden.

Die Entwässerungsnut 5 weist an ihrem Übergang in den Verbindungsabschnitt 13 ihre größte Nutbreite 18 auf und wird entlang ihrer Erstreckung in Umfangsrichtung schmaler. Die Längenerstreckung der Entwässerungsnut 5 verläuft im Wesentlichen entlang einer Geraden, die in einem Nutwinkel 19 in Axialrichtung nach innen von der Umfangsrichtung abweicht. Der Nutwinkel 19 ist im Zusammenspiel mit dem Umfangsabstand 10 zwischen den beiden Rillen 2, 3 und einem axialen Zwischenraum 9 zwischen der zweiten Rille 3 und der Umfangsrille 7 so bemessen, dass sich die Entwässerungsnut 5 im Wesentlichen in der Mitte des axialen Zwischenraums 9 an der zweiten Rille 3 vorbei erstreckt.

In Figur 2 ist der laterale Verlauf einer größten Tiefe je Breitenerstreckung entlang einer Längenerstreckung durch die Entwässerungsnut 5, den Verbindungsabschnitt 13 und die ersten Rille 2 mit einer durch die genannten Profilelemente verlaufenden gestrichelten Linie gekennzeichnet. Figur 3 zeigt schematisch einen Schnitt durch das Profil des Fahrzeugreifens entlang dieser gestrichelten Linie. Demgemäß ist die Nuttiefe 15 kleiner als die Rillentiefe 16 der ersten Rille 2. Der Übergang zwischen den beiden Tiefen vollzieht sich in einem Übergangsbereich 11, der eine laterale Übergangserstreckung 12 aufweist. Wie in Figur 2 angedeutet, schließt der Übergangsbereich direkt an den Verbindungsabschnitt 13 an, wobei die Übergangserstreckung 12 im Wesentlichen in Axialrichtung in die erste Rille 2 hinein verläuft.

### Bezugszeichenliste

- 1: Fahrzeugreifen
- 2: erste Rille
- 3: zweite Rille
- 4: Schulterbereich
- 4a: schulterseitiges Profilband
- 5: Entwässerungsnut
- 6: Vorbeierstreckungsabstand
- 7: Umfangsrille
- 8: mittleres Profilband
- 9: axialer Zwischenraum
- 10: Umfangsabstand
- 11: Übergangsbereich
- 12: Übergangserstreckung
- 13: Verbindungsabschnitt
- 14: Außenradius
- 15: Nuttiefe
- 16: Rillentiefe
- 17: Vorbeierstreckungslänge
- 18: Nutbreite
- 19: Nutwinkel
- 20: erste Gruppe
- 21: weitere Gruppe

## Patentansprüche

1. Fahrzeugreifen (1) mit wenigstens einer ersten und einer zweiten Rille (2, 3), wobei die erste und die zweite Rille (2, 3) in einem Schulterbereich (4) des Fahrzeugreifens (1) ausgebildet sind und vornehmlich in Querrichtung verlaufen, wobei eine vornehmlich in Querrichtung verlaufende Rille (2, 3) unter einem Winkel von weniger als 40° gegenüber der Querrichtung verläuft, wobei wenigstens eine vornehmlich in Umfangsrichtung verlaufende Entwässerungsnut (5) so angeordnet ist, dass die Entwässerungsnut (5) in ein axial inneres Ende der ersten Rille (2) mündet, wobei die erste Rille (2), die zweite Rille (3) und die Entwässerungsnut (5) in einem schulterseitigen Profilband (4a) ausgebildet sind, wobei das schulterseitige Profilband (4a) durch eine Umfangsrille (7) von einem mittleren Profilband getrennt ist,
**dadurch gekennzeichnet,**
**dass** sich die Entwässerungsnut (5) von der ersten Rille (2) aus in Umfangsrichtung an einem axial inneren Ende der zweiten Rille (3) vorbei erstreckt, wobei die Entwässerungsnut (5) nicht mit der zweiten Rille (3) verbunden ist, wobei die Entwässerungsnut (5) nicht in einer durchgehend umlaufenden Nut und ohne zusätzliche Kreuzungen und/oder Einmündungen bei vornehmlich in Querrichtung verlaufenden Rillen angeordnet ist.

2. Fahrzeugreifen gemäß Anspruch 1, **dadurch gekennzeichnet, dass** sich die Entwässerungsnut (5) in einem axialen Vorbeierstreckungsabstand (6) von 2 mm bis 8 mm an der zweiten Rille (3) vorbei erstreckt.

3. Fahrzeugreifen gemäß einem der Ansprüche 1 oder 2, **dadurch gekennzeichnet, dass** die erste Rille (2), die zweite Rille (3) und die Entwässerungsnut (5) in einem schulterseitigen Profilband (4a) ausgebildet sind, wobei das schulterseitige Profilband (4a) durch eine Umfangsrille (7) von einem mittleren Profilband (8) getrennt ist, wobei zwischen der zweite Rille (2) und der Umfangsrille (7) ein axialer Zwischenraum (9) liegt und wobei sich die Entwässerungsnut (5) in einem axial um die Mitte des axialen Zwischenraums (9) zentrierten Bereich von weniger als 25% der axialen Länge des axialen Zwischenraums (9) an der zweiten Rille (3) vorbei erstreckt.

4. Fahrzeugreifen gemäß einem der Ansprüche 1 bis 3, **dadurch gekennzeichnet, dass** die erste und die zweite Rille (2, 3) in Umfangsrichtung um einen Umfangsabstand (10) zwischen 20 mm und 50 mm, vorzugsweise zwischen 25 mm und 40 mm voneinander beabstandet sind.

5. Fahrzeugreifen gemäß einem der Ansprüche 1 bis 4, **dadurch gekennzeichnet, dass** sich die Entwässerungsnut (5) in Umfangsrichtung um eine Vorbeierstreckungslänge (17) zwischen 1% und 99%, vorzugsweise zwischen 5% und 25% des Umfangsabstands (10) zwischen der ersten und der zweiten Rille (2, 3) an der zweiten Rille (3) vorbei erstreckt.

6. Fahrzeugreifen gemäß einem der Ansprüche 1 bis 5, **dadurch gekennzeichnet, dass** die Entwässerungsnut (5) über einen Großteil ihrer Erstreckung eine Nuttiefe (15) von 1,5 mm bis 3 mm aufweist und/oder, dass die Entwässerungsnut (5) eine Nuttiefe (15) von 5% bis 75%, vorzugsweise von 15% bis 30% einer Rillentiefe (16) der ersten Rille (2) aufweist.

7. Fahrzeugreifen gemäß einem der Ansprüche 1 bis 6, **dadurch gekennzeichnet, dass** ein Übergangsbereich (11) in der Tiefe zwischen der Entwässerungsnut (5) und der ersten Rille (2) eine laterale Übergangserstreckung (12) mit einer Länge von 0,5 mm bis 10 mm, vorzugsweise von 2 mm bis 5 mm aufweist und/oder dass die laterale Übergangserstreckung (12) vornehmlich in Querrichtung verläuft.

8. Fahrzeugreifen gemäß einem der Ansprüche 1 bis 7, **dadurch gekennzeichnet, dass** die Entwässerungsnut (5) und die erste Rille (2) über einen lateral abgerundeten Verbindungsabschnitt (13) miteinander verbunden sind, wobei der abgerundete Verbindungsabschnitt (13) durch einen Außenradius (14) zwischen 1 mm und 10 mm beschrieben wird.

9. Fahrzeugreifen gemäß einem der Ansprüche 1 bis 8, **dadurch gekennzeichnet, dass** die Entwässerungsnut (5) eine sich über ihre Erstreckung verringernde Nutbreite (18) aufweist, wobei sie ihre größte Nutbreite (18) an ihrer Mündung in die erste Rille (2) aufweist, wobei die größte Nutbreite (18) vorzugsweise zwischen 1 mm und 5 mm, weiter vorzugsweise zwischen 2 mm und 4 mm liegt.

10. Fahrzeugreifen gemäß einem der Ansprüche 1 bis 9, **dadurch gekennzeichnet, dass** die erste und die zweite Rille (2, 3) entlang eines Großteils ihrer Erstreckung parallel zueinander verlaufen.

11. Fahrzeugreifen gemäß einem der Ansprüche 1 bis 10, **dadurch gekennzeichnet, dass** die erste und/oder die zweite Rille (2, 3) entlang eines Großteils ihrer Erstreckung in einem Rillenwinkel von 70° bis 90°, vorzugsweise in einem Rillenwinkel von 85° bis 90° zur Umfangsrichtung verlaufen.

12. Fahrzeugreifen gemäß einem der Ansprüche 1 bis 11, **dadurch gekennzeichnet, dass** die erste und die zweite Rille (2, 3) an ihren axial inneren Enden axial auf der gleichen Breite enden.

13. Fahrzeugreifen gemäß einem der Ansprüche 1 bis 12, **dadurch gekennzeichnet, dass** die Entwässerungsnut (5) entlang eines Großteils ihrer lateralen, also entlang einer Basisfläche des Fahrzeugreifens (1) verlaufenden Erstreckung in einem Nutwinkel (19) von 0° bis 40°, vorzugsweise in einem Nutwinkel (19) von 5° bis 15° zur Umfangsrichtung verläuft, wobei der Nutwinkel (19) axial innerhalb an der Umfangsrichtung anliegt.

14. Fahrzeugreifen gemäß einem der Ansprüche 1 bis 13, **dadurch gekennzeichnet, dass** die erste Rille (2) und die Entwässerungsnut (5) einen Einschlusswinkel zwischen 90° und 170°, vorzugsweise zwischen 95° und 105° einschließen.

15. Fahrzeugreifen gemäß einem der Ansprüche 1 bis 14, **dadurch gekennzeichnet, dass** die erste Rille (2), die zweite Rille (3) und die Entwässerungsnut (5) eine erste Gruppe (20) bilden, wobei auf dem Fahrzeugreifen (1) wenigstens eine weitere Gruppe (21) nach dem Muster der ersten Gruppe (20) mit zwei Rillen (2, 3) und einer Entwässerungsnut (5) ausgebildet ist, wobei die weitere Gruppe (21) gegenüber der ersten Gruppe (20) in Umfangsrichtung verschoben angeordnet ist.

## Claims

1. Vehicle tyre (1) having at least one first and one second groove (2, 3), wherein the first and the second groove (2, 3) are formed in a shoulder region (4) of the vehicle tyre (1) and run predominantly in the transverse direction, wherein a groove (2, 3) running predominantly in the transverse direction runs at an angle of less than 40° with respect to the transverse direction, wherein at least one drainage groove (5) running predominantly in the circumferential direction is disposed in such a way that the drainage groove (5) opens into an axially inner end of the first groove (2), wherein the first groove (2), the second groove (3) and the drainage groove (5) are formed in a shoulder-proximal profile strip (4a), wherein the shoulder-proximal profile strip (4a) is separated from a central profile strip by a circumferential groove (7),
**characterized in that**
the drainage groove (5) extends from the first groove (2) in the circumferential direction past an axially inner end of the second groove (3), wherein the drainage groove (5) is not connected to the second groove (3), wherein the drainage groove (5) is not disposed in a continuously encircling groove and without additional intersections and/or openings at grooves running predominantly in the transverse direction.

2. Vehicle tyre according to Claim 1, **characterized in that** the drainage groove (5) extends past the second groove (3) at an axial passing spacing (6) of 2 mm to 8 mm.

3. Vehicle tyre according to either of Claims 1 and 2, **characterized in that** the first groove (2), the second groove (3) and the drainage groove (5) are formed in a shoulder-proximal profile strip (4a), wherein the shoulder-proximal profile strip (4a) is separated from a central profile strip (8) by a circumferential groove (7), wherein an axial intermediate space (9) lies between the second groove (2) and the circumferential groove (7), and wherein the drainage groove (5) extends past the second groove (3) in a region which is axially centred about the centre of the axial intermediate space (9) and is less than 25% of the axial length of the axial intermediate space (9).

4. Vehicle tyre according to one of Claims 1 to 3, **characterized in that** the first and the second groove (2, 3) are mutually spaced apart in the circumferential direction by a circumferential spacing (10) between 20 mm and 50 mm, preferably between 25 mm and 40 mm.

5. Vehicle tyre according to one of Claims 1 to 4**, characterized in that** the drainage groove (5) extends past the second groove (3) in the circumferential direction by a passing length (17) of between 1% and 99%, preferably between 5% and 25%, of the circumferential spacing (10) between the first and the second groove (2, 3).

6. Vehicle tyre according to one of Claims 1 to 5, **characterized in that** the drainage groove (5) has a groove depth (15) of 1.5 mm to 3 mm over a majority of its extent and/or **in that** the drainage groove (5) has a groove depth (15) of 5% to 75%, preferably of 15% to 30%, of a groove depth (16) of the first groove (2).

7. Vehicle tyre according to one of Claims 1 to 6, **characterized in that** a transition region (11) in the depth between the drainage groove (5) and the first groove (2) has a lateral transition extent (12) with a length of 0.5 mm to 10 mm, preferably of 2 mm to 5 mm, and/or **in that** the lateral transition extent (12) runs predominantly in the transverse direction.

8. Vehicle tyre according to one of Claims 1 to 7, **characterized in that** the drainage groove (5) and the first groove (2) are connected to one another by way of a laterally radiused connecting portion (13), wherein the radiused connecting portion (13) is defined by an external radius (14) of between 1 mm and 10 mm.

9. Vehicle tyre according to one of Claims 1 to 8, **characterized in that** the drainage groove (5) has a groove width (18) which decreases over its extent, wherein it has its greatest groove width (18) at its mouth to the first groove (2), wherein the greatest groove width (18) is preferably between 1 mm and 5 mm, more preferably between 2 mm and 4 mm.

10. Vehicle tyre according to one of Claims 1 to 9, **characterized in that** the first and the second groove (2, 3) run parallel to one another along a majority of their extent.

11. Vehicle tyre according to one of Claims 1 to 10, **characterized in that** the first and/or the second groove (2, 3) run along a majority of their extent at a groove angle of 70° to 90°, preferably at a groove angle of 85° to 90°, with respect to the circumferential direction.

12. Vehicle tyre according to one of Claims 1 to 11, **characterized in that** the first and the second groove (2, 3) at their axially inner ends terminate axially at the same width.

13. Vehicle tyre according to one of Claims 1 to 12, **characterized in that** the drainage groove (5) extends along a majority of its lateral extent, that is to say extends along a base surface of the vehicle tyre (1), at a groove angle (19) of 0° to 40°, preferably at a groove angle (19) of 5° to 15°, with respect to the circumferential direction, wherein the groove angle (19) bears axially within the circumferential direction.

14. Vehicle tyre as according to one of Claims 1 to 13, **characterized in that** the first groove (2) and the drainage groove (5) include an inclusion angle between 90° and 170°, preferably between 95° and 105°.

15. Vehicle tyre according to one of Claims 1 to 14, **characterized in that** the first groove (2), the second groove (3) and the drainage groove (5) form a first group (20), wherein formed on the vehicle tyre (1) is at least one further group (21) according to the pattern of the first group (20) with two grooves (2, 3) and one drainage groove (5), wherein the further group (21) is disposed so as to be displaced in the circumferential direction with respect to the first group (20).

## Revendications

1. Pneumatique pour véhicules (1) comportant au moins une première et une deuxième rainure (2, 3), la première et la deuxième rainure (2, 3) étant réalisées dans une zone d'épaulement (4) du pneumatique pour véhicules (1) et s'étendant principalement dans la direction transversale, une rainure (2, 3) s'étendant principalement dans la direction transversale s'étendant suivant un angle inférieur à 40 ° par rapport à la direction transversale, au moins une gorge de drainage (5) s'étendant essentiellement dans la direction circonférentielle étant disposée de telle sorte que la gorge de drainage (5) débouche dans une extrémité axialement intérieure de la première rainure (2), la première rainure (2), la deuxième rainure (3) et la gorge de drainage (5) étant réalisées dans une bande profilée (4a) côté épaulement, la bande profilée (4a) côté épaulement étant séparée d'une bande profilée centrale par une rainure circonférentielle (7),
**caractérisé**
**en ce que** la gorge de drainage (5) s'étend à partir de la première rainure (2) dans la direction circonférentielle au-delà d'une extrémité axialement intérieure de la deuxième rainure (3), la gorge de drainage (5) n'étant pas reliée à la deuxième rainure (3), la gorge de drainage (5) n'étant pas disposée dans une gorge circonférentielle continue et sans croisements et/ou débouchés supplémentaires en cas de rainures s'étendant essentiellement dans la direction transversale.

2. Pneumatique pour véhicules selon la revendication 1, **caractérisé en ce que** la gorge de drainage (5) s'étend au-delà de la deuxième rainure (3) à une distance d'étendue de dépassement axiale (6) de 2 mm à 8 mm.

3. Pneumatique pour véhicules selon l'une des revendications 1 ou 2, **caractérisé en ce que** la première rainure (2), la deuxième rainure (3) et la gorge de drainage (5) sont réalisées dans une bande profilée (4a) côté épaulement, la bande profilée (4a) côté épaulement étant séparée d'une bande profilée centrale (8) par une rainure circonférentielle (7), un espace intermédiaire axial (9) se situant entre la deuxième rainure (2) et la rainure circonférentielle (7) et la gorge de drainage (5) s'étendant au-delà de la deuxième rainure (3) dans une zone centrée axialement sur le centre de l'espace intermédiaire axial (9) de moins de 25 % de la longueur axiale de l'espace intermédiaire axial (9).

4. Pneumatique pour véhicules selon l'une des revendications 1 à 3, **caractérisé en ce que** la première et la deuxième rainure (2, 3) sont espacées l'une de l'autre dans la direction circonférentielle d'une distance circonférentielle (10) comprise entre 20 mm et 50 mm, de préférence entre 25 mm et 40 mm.

5. Pneumatique pour véhicules selon l'une des revendications 1 à 4, **caractérisé en ce que** la gorge de drainage (5) s'étend au-delà de la deuxième rainure (3) dans la direction circonférentielle sur une longueur d'étendue de dépassement (17) comprise entre 1 % et 99 %, de préférence comprise entre 5 % et 25 % de la distance circonférentielle (10) entre la première et la deuxième rainure (2, 3).

6. Pneumatique pour véhicules selon l'une des revendications 1 à 5, **caractérisé en ce que** la gorge de drainage (5) présente sur une majeure partie de son étendue une profondeur de gorge (15) de 1,5 mm à 3 mm et/ou **en ce que** la gorge de drainage (5) présente une profondeur de gorge (15) de 5 % à 75 %, de préférence de 15 % à 30 % d'une profondeur de rainure (16) de la première rainure (2).

7. Pneumatique pour véhicules selon l'une des revendications 1 à 6, **caractérisé en ce qu'**une zone de transition (11) présente dans la profondeur entre la gorge de drainage (5) et la première rainure (2) une étendue de transition latérale (12) dotée d'une longueur de 0,5 mm à 10 mm, de préférence de 2 mm à 5 mm et/ou **en ce que** l'étendue de transition latérale (12) s'étend essentiellement dans la direction transversale.

8. Pneumatique pour véhicules selon l'une des revendications 1 à 7, **caractérisé en ce que** la gorge de drainage (5) et la première rainure (2) sont reliées l'une à l'autre par le biais d'une partie de liaison (13) arrondie latéralement, la partie de liaison (13) arrondie étant décrite par un rayon extérieur (14) compris entre 1 mm et 10 mm.

9. Pneumatique pour véhicules selon l'une des revendications 1 à 8, **caractérisé en ce que** la gorge de drainage (5) présente une largeur de gorge (18) diminuant sur son étendue, celle-ci présentant sa plus grande largeur de gorge (18) au niveau de son débouché dans la première rainure (2), la plus grande largeur de gorge (18) se situant de préférence entre 1 mm et 5 mm, plus préférablement entre 2 mm et 4 mm.

10. Pneumatique pour véhicules selon l'une des revendications 1 à 9, **caractérisé en ce que** la première et la deuxième rainure (2, 3) s'étendent parallèlement l'une à l'autre le long d'une majeure partie de leur étendue.

11. Pneumatique pour véhicules selon l'une des revendications 1 à 10, **caractérisé en ce que** la première et/ou la deuxième rainure (2, 3) s'étendent le long d'une majeure partie de leur étendue suivant un angle de rainure de 70 ° à 90 °, de préférence suivant un angle de rainure de 85 ° à 90 ° par rapport à la direction circonférentielle.

12. Pneumatique pour véhicules selon l'une des revendications 1 à 11, **caractérisé en ce que** la première et la deuxième rainure (2, 3) se terminent axialement à la même largeur à leurs extrémités axialement intérieures.

13. Pneumatique pour véhicules selon l'une des revendications 1 à 12, **caractérisé en ce que** la gorge de drainage (5) s'étend suivant un angle de gorge (19) de 0 ° à 40 °, de préférence suivant un angle de gorge (19) de 5 ° à 15 ° par rapport à la direction circonférentielle le long d'une majeure partie de son étendue latérale, c'est-à-dire s'étendant le long d'une surface de base du pneumatique pour véhicules (1), l'angle de gorge (19) étant contigu à la direction circonférentielle axialement à l'intérieur de celle-ci.

14. Pneumatique pour véhicules selon l'une des revendications 1 à 13, **caractérisé en ce que** la première rainure (2) et la gorge de drainage (5) forment un angle inclus compris entre 90 ° et 170 °, de préférence entre 95 ° et 105 °.

15. Pneumatique pour véhicules selon l'une des revendications 1 à 14, **caractérisé en ce que** la première rainure (2), la deuxième rainure (3) et la gorge de drainage (5) forment un premier groupe (20), au moins un autre groupe (21) étant réalisé selon le motif du premier groupe (20) avec deux rainures (2, 3) et une gorge de drainage (5) sur le pneumatique pour véhicules (1), l'autre groupe (21) étant disposé de manière décalée dans la direction circonférentielle par rapport au premier groupe (20).
